(19) Europäisches Patentamt
European Patent Office
Office européen des brevets

(11) **EP 2 338 681 B1**

(12) **EUROPEAN PATENT SPECIFICATION**

(45) Date of publication and mention of the grant of the patent:
**17.12.2014 Bulletin 2014/51**

(21) Application number: **09822019.7**

(22) Date of filing: **20.10.2009**

(51) Int Cl.:
*B32B 33/00* ^(2006.01)   *B32B 15/08* ^(2006.01)
*B32B 27/00* ^(2006.01)   *G02B 5/18* ^(2006.01)
*G03H 1/26* ^(2006.01)

(86) International application number:
**PCT/JP2009/068052**

(87) International publication number:
**WO 2010/047322 (29.04.2010 Gazette 2010/17)**

(54) **MULTILAYER STRUCTURE HAVING FINE PERIODIC STRUCTURE**

MEHRSCHICHTIGE STRUKTUR MIT EINER FEINEN PERIODISCHEN STRUKTUR

STRUCTURE MULTICOUCHE À STRUCTURE PÉRIODIQUE FINE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.10.2008 JP 2008272250**

(43) Date of publication of application:
**29.06.2011 Bulletin 2011/26**

(73) Proprietors:
• **Toyo Seikan Kaisha, Ltd.**
  **Shinagawa-ku**
  **Tokyo 141-8640 (JP)**
• **Japan Crown Cork Co., Ltd**
  **Chiyoda-ku**
  **Tokyo 100-0011 (JP)**

(72) Inventors:
• **YUASA, Yoshiyuki**
  **Yokohama-shi**
  **Kanagawa 240-0062 (JP)**
• **TAKENOUCHI, Ken**
  **Yokohama-shi**
  **Kanagawa 240-0062 (JP)**
• **KUNIMOTO, Go**
  **Hiratsuka-shi**
  **Kanagawa 254-0021 (JP)**
• **FURUSAWA, Mao**
  **Hiratsuka-shi**
  **Kanagawa 254-0021 (JP)**
• **KIKUCHI, Hiroaki**
  **Hiratsuka-shi**
  **Kanagawa 254-0021 (JP)**

(74) Representative: **Müller-Boré & Partner**
  **Patentanwälte PartG mbB**
  **Friedenheimer Brücke 21**
  **80639 München (DE)**

(56) References cited:
  **WO-A1-2007/119773   JP-A- 2008 151 816**
  **US-A1- 2006 263 554**

**Description**

Technical Field:

This invention relates to a laminated structural body having a fine periodic structure. More specifically, the invention relates to a laminated structural body such as a cap or a metal can having, formed in a film, a fine periodic structure that exhibits structured colors excellent in decorative effect.

Background Art:

In the field of caps and containers, attempts have heretofore been made to improve their commercial values by decorating the surfaces of the containers. In recent years, however, developing the colors by chemical means using such substances as pigments has been renounced from the standpoint of recyclability and adaptability to the environment. Therefore, a variety of structured colors have been proposed to develop colors by utilizing such phenomena as diffraction and interference of light relying on a fine periodic structure to substitute for the above technology.

For example, the following patent document 1 proposes a method of reproducing a relief hologram by depositing a thin metal layer of a thickness of 1000 Å on the surface of a thermoplastic synthetic resin base material to form a composite base material, bringing the surface of a metal mold of a dented-and-protruded shape of a relief hologram into contact with the surface of the thin metal layer of the composite base material, and effecting the heating and pressing to impart a shape thereto.

According to the conventional fabrication method of forming the fine periodic structure by reproducing a printing block, however, it is difficult to form the fine periodic structure on a curved surface and on a dented-and-protruded surface. Besides, fabricating the printing block is costly, and changing the pattern requires newly fabricating a printing block, involving difficulty when it is attempted to produce many kinds of products in small quantities. Further, forming the fine periodic structure on a flat plate and forming the flat plate into a desired shape is accompanied by a problem of weakened decorative effect.

There has, further, been proposed a method of expressing structured colors by forming the fine periodic structure by the irradiation with light, such as LIPS (laser induced periodic structures) (see, for example, a non-patent document 1). This is a fine periodic structure formed in a self-organizing manner in the surface of a material by the irradiation with a laser beam, and the present applicant is also proposing a structural body that expresses structured colors by utilizing the LIPS (patent document 2).

Prior Art Documents:

Patent Documents:

Patent document 1: JP-B-3-60115
Patent document 2: JP-A-2007-286113
Patent document 3: WO 2007/119773 A1
Patent document 4: US 2006/0263554 A1

Non-patent Document:
Non-patent document 1: Sylvain Lazare, "Large Scale Excimer Laser Production of Submicron Periodic Structures on Polymer Surface", Applied Surface Science, 69(1993) 31-37, North Holland

Outline of the Invention:

Problems that the Invention is to Solve:

The structural body capable of expressing structured colors by utilizing the above LIPS requires no printing block and can change the pattern by changing a scanning program, and can be adapted to producing products of many kinds in small quantities and, further, can be easily applied not only to flat surfaces but also to curved surfaces and dented-and-protruded surfaces. Moreover, unlike the case of using the printing block, no member comes in contact with the surface that is to be worked offering such excellent action and effect that the formed article is permitted to be additionally worked.

Depending upon the material or condition of the surface of the structural body on where a fine periodic structure is to be formed, however, it was learned that satisfactory structured colors are not necessarily obtained.

It is, therefore, an object of the present invention to provide a laminated structural body having a fine periodic structure that is reliably and efficiently formed in the surface of the structural body by the irradiation with a laser beam, the laminated structural body being capable of expressing a variety of structured colors like a hologram.

Another object of the present invention is to provide a cap and a container having, formed in the surfaces thereof, a fine periodic structure that expresses structured colors.

Means for Solving the Problems:

According to the present invention, there is provided a laminated structural body according to claim 1.

In the laminated structural body of the present invention, it is desired that:

1. The wavelength of the laser beam lies in a wavelength region in which the film does not permit passage of light;
2. A protection layer that permits passage of the laser beam is formed on the surface of the film, and the regularly arranged periodic structure that expresses structured colors is formed in the interface between the film and the protection layer;
3. The film comprises a material containing one or more kinds of compounds having an aromatic ring and, particularly, the compounds are high molecular compounds having the aromatic ring in the molecular chains thereof;
4. The base material comprises any one of a metal, a glass or a plastic material;
5. The laminated structural body is a metallic or resin cap having the film positioned on the outer surface side of the base material; and
6. The laminated structural body is a metal can having the film positioned on the outer surface side of the base material.

Effects of the Invention:

In the laminated structural body of the invention, a regularly arranged fine periodic structure capable of expressing structured colors is effectively formed to express a variety of structured colors like a hologram.

Further, a film forming the fine periodic structure comprises a material containing one or more compounds having an aromatic ring and, therefore, effectively absorbs a laser beam to effectively generate laser abrasion.

Further, upon forming a protection layer on the surface of the film, the laminated structural body is legible for its structured colors from the outer surface side thereof. Besides, since the fine periodic structure has been formed inside the laminated structural body, the fine periodic structure is not damaged or contaminated effectively preventing such an occurrence that the intended structured colors are not expressed. When used as a marking for representing the truth or falsehood, an advantage is offered in that the marking cannot be erased or forged. Further, the protection layer enables a pattern to be partly formed, and excellent decorative effect can be imparted.

Unlike the laminated structural body forming the fine periodic structure by the reproduction of the printing block, the laminated structural body of the invention enables the fine periodic structure to be formed on the curved surfaces and on the dented-and-protruded surfaces, and can be applied to the caps and cans by the subsequent working maintaining excellent productivity.

Moreover, no printing block is required, and the pattern can be changed by changing a scanning program lending the laminated structural body well applicable to a variety of kinds of articles produced in small quantities.

Brief Description of the Drawings:

[Fig. 1] is a graph showing a transmission spectrum of a stretched polyethylene terephthalate.
[Fig. 2] is a view illustrating an example of the sectional structure of a laminated structural body of the invention.
[Fig. 3] is a view illustrating another example of the sectional structure of the laminated structural body of the invention.
[Fig. 4] is a schematic perspective view showing the constitution of a laser irradiation device.
[Fig. 5] is a model diagram illustrating an interference region of light with which the structural body is irradiated.

Mode for Carrying Out the Invention:

The laminated structural body of the present invention has an important feature in that a film is formed on the surface of a base material, and the surface of the film is irradiated with a laser beam having a periodic intensity profile to thereby form a regularly arranged periodic structure that expresses structured colors.

In the working for forming the periodic structure by the irradiation with a laser beam having a periodic intensity profile (hereinafter often referred to as "LIPS working") employed by the present invention, a laser beam of a wavelength which the material being irradiated does not permit to pass through is applied onto the surface to be irradiated in an interference region where the laser beam fluxes intersect, whereby a periodic light intensity profile is induced on the surface being irradiated, and laser abrasion occurs in the portions of high intensity to form dented portions. With the dented portions being regularly and continuously formed maintaining nearly an equal gap, there is formed a fine periodic structure that diffracts light. If the gap among the dented portions in the fine periodic structure is close to a wavelength of visible ray (about 400 nm to about 700 nm), structured colors can be expressed. Besides, since the periodic structure of a dented-and-protruded shape is formed in the irradiated surface due to the formation of dented portions by laser abrasion, a variety of colors can be expressed like a hologram instead of developing a single color.

Here, the laser abrasion stands for the photolysis phenomenon (transpiration) in which when a material is irradiated with a laser beam, the material scatters in the form of molecular clusters from the surface thereof.

In the LIPS working, selecting a laser to be used and a material of the surface to be irradiated becomes an important factor. Generally, however, limitation is imposed on selecting the laser that can be used and, therefore, it becomes important to select the surface to be irradiated that matches with the laser.

That is, to form the regularly arranged periodic structure that expresses structured colors by the LIPS working, the laser that is used must be a high-power pulse laser, must have a wavelength in the ultraviolet region and must be highly coherent. At present, the lasers that meet the above requirements are limited to particular ones such as YAG laser and the like that will be described later.

Among the materials for forming a film that does not permit the passage of the laser beam of the wavelength that is used according to the present invention, it was discovered that a material containing at least one or more kinds of compounds having an aromatic ring efficiently absorbs the laser beam and effectively generates laser abrasion, making it possible to form a regularly arranged fine periodic structure.

This will become obvious from the results of Examples described later.

That is, while no structured color is expressed by the laminated structural bodies having the film of a vinyl chloride which is a resin that permits passage of the used laser beam (Comparative Examples 1 to 5), structured colors are expressed by the laminated structural bodies having the film of a polyethylene terephthalate or a phthalic acid resin which does not permit passage of the used laser beam (Examples 1 to 7).

Further, the structured colors are expressed even by the vinyl chloride which is a resin constituting the film when it is blended with compounds having an aromatic ring (Examples 8 and 9).

The laminated structural body of the invention can also assume a two-layer structure in which a protection layer of a material that permits passage of laser beam of the used wavelength is formed on the film of a material containing compounds having an aromatic ring that does not permit passage of laser beam of the used wavelength, which is formed on the base material.

Therefore, the laser beam reaches the film passing through the protection layer, and the laser abrasion occurs in the surface of the film to form a fine periodic structure in the interface between the film and the protection layer. The laminated structural body is legible for its structured colors from the outer surface side thereof. Besides, since the fine periodic structure has been formed inside the laminated structural body, the fine periodic structure is not damaged or contaminated effectively preventing such an occurrence that the intended structured colors are not expressed.

In the invention, the resin that permits passage of light or does not permit passage of light can be defined as described below.

That is, the resin that "permits passage of light" is in the case when the resin permits passage of not less than 70% of light of a particular wavelength, the resin that "half permits passage of light" is in the case when the resin permits passage of not less than 10% but less than 70% of light, and the resin that "does not permit passage of light" is in the case when the resin permits passage of less than 10% of light. When the resin permits light of a given wavelength to pass through, the light of this wavelength enters into the interior of the resin. When the resin does not permit light to pass through, the light enters into only near the surface of the resin.

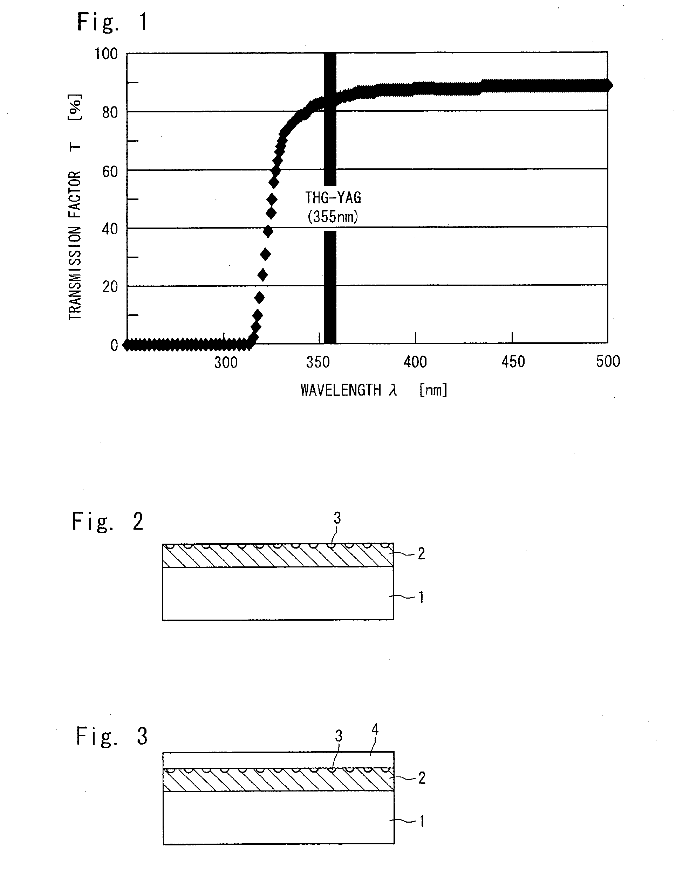

The stretched polyethylene terephthalate (hereinafter referred to as "stretched PET") will be concretely described below. Referring to Fig. 1, the stretched PET permits passage of not less than 70% of light of wavelengths of not shorter than about 330 nm and, therefore, permits passage of light having wavelengths of not shorter than 330 nm. The stretched PET permits passage of not less than 10% but less than 70% of light of wavelengths of about 320 nm and, therefore, permits light to pass through half. The stretched PET permits passage of less than 10% of light of wavelengths of shorter than about 310 nm and, therefore, does not permit passage of light.

(Laminated structural body)

In the present invention, the laminated structural body having the regularly arranged fine periodic structure that expresses structured colors formed by the irradiation with a laser beam, includes, as shown in Fig. 2, a film 2 of a material which does not permit passage of laser beam of a wavelength that is used and which contains compounds having an aromatic ring, the film 2 being formed on the surface of a base material 1. The film 2 has the periodic structure formed in the surface thereof and in which dented portions 3 are regularly arranged maintaining a gap close to the wavelength of the visible ray (about 400 nm to about 700 nm) due to the laser abrasion.

As shown in Fig. 3, further, the laminated structural body may further have a protection layer 4 formed on the film 2. In this case as described above, it is important that the material forming the protection layer 4 permits passage of laser beam of a wavelength that is used. There is, thus, formed the periodic structure in which the dented portions 3 are regularly arranged maintaining a gap close to the wavelength of the visible ray (about 400 nm to about 700 nm) due to the laser abrasion in the interface between the film 2 and the protection layer 4.

[Base material]

As the base material, there can be used various materials so far as they permit the formation of a film on the surfaces thereof. Here, however, it is desired to use such various materials as metal, glass, plastics and paper that have heretofore been used for packages.

When the structural body is a container such as can, bottle, cup or tray, in particular, there can be preferably used metal, glass or plastics. When the structural body is a cap, there can be preferably used metal or plastics.

As the metal, though there is no limitation, there can be used various surface-treated steel sheets such as tin-free steel, tin-plated steel sheet or tin sheet; light metal sheets such as aluminum foil and the like; and metal sheets that have heretofore been used for the metal cans and metal caps.

As the plastics, there can be used polyester resins such as polyethylene terephthalate, polybutylene terephthalate and polyarylate; olefin resins such as polyethylene and polypropylene; as well as plastics such as polyamide resin, vinyl chloride resin, polystyrene and polycarbonate that have heretofore been used for the plastic containers and plastic caps.

In the laminated structural body of the present invention, it is desired that the surface roughness of the base material on the film side is not larger than 10 μm and, particularly, not larger than 3 μm in terms of an average surface roughness (Ra). This makes it possible to form a smoother film which vividly reflects the structured colors expressed by the regularly arranged fine periodic structure formed by the laser abrasion.

[Film]

In the laminated structural body of the invention, the film on the surface of the base material is made from a material that does not permit passage of laser beam that is used and that contains compounds having an aromatic ring.

As the skeletal structures of the aromatic ring of the invention, there can be exemplified aromatic hydrocarbon rings such as benzene ring, naphthalene ring, anthracene ring, phenanthrene ring, fluorene ring, phenanthrene ring, azulene ring and pyrene ring; and heteroaromatic rings such as pyridine ring, pyradine ring, furan ring, thiophene ring, pyrrole ring, benzothiophene ring, benzopyrrole ring, imidazole ring, oxadiazole ring, quinoline ring, isoquinoline ring, quinoxaline ring, benzofuran ring, carbazole ring, thiazole ring and dibenzothiophene ring.

In the present invention, the film may be in the form of either a resin film or a coating.

As the resin capable of constituting the resin film, there can be used a compound which does not permit passage of laser beam that is used and has an aromatic ring and, particularly, a high molecular compound having an aromatic ring in the molecular chains. So far as the above condition is satisfied, there can be used any known thermoplastic resin that is capable of forming a film.

As the thermoplastic resin, there can be used aromatic polyester resins having, as a dicarboxylic acid component, an aromatic ring such as terephthalic acid, isophthalic acid, naphthalenedicarboxylic acid, p-β-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, trimellitic acid, pyromellitic acid, hemimellitic acid, and biphenyl-3,4,3',4'-tetracarboxylic acid; aromatic polyamide resins having a metaxylylenediamine as a diamine component; and styrene resins.

As the resin for constituting the film, there can be used even those olefin resins such as polyethylene and polypropylene, as well as the resins without aromatic ring in the molecular chains thereof, such as vinyl chloride resin and polycarbonate, provided they are blended with an additive of a compound having an aromatic ring, such as dye or pigment that will be described later.

When the film formed in the invention is a resin film, there can be particularly preferably used polyethylene terephthalate, ethylene terephthalate/isophthalate copolymer and polybutylene terephthalate.

As the coating material capable of constituting a coating, there can be used any of thermosetting resin coating material, thermoplastic resin coating material or ultraviolet ray-curable coating material that has heretofore been used for metal cans and metal caps so far as it does not permit passage of a laser beam that is used and contains a compound having an aromatic ring.

The coating material may use, as a base resin, a high molecular compound having an aromatic ring in the molecular chains thereof. Or, a curing agent or a polymerization initiator may comprise a compound having an aromatic ring.

As the thermosetting resin that serves as the base resin, there can be used, for example, phenol resin, ketone formaldehyde resin, novolak resin, xylene resin, aromatic acryl resin, bisphenol type epoxy resin, benzoguanamine resin, phenoxy resin, phenol-modified alkyd resin, unsaturated polyester resin and amino resin.

There can be, further, used a composition of the above thermosetting resin with a thermoplastic resin such as vinyl chloride/vinyl acetate copolymer, vinyl chloride/maleic acid copolymer, vinyl chloride/maleic acid/vinyl acetate copolymer, acrylic polymer, or unsaturated polyester resin. These resin coating materials can be used alone or in a combination of two or more kinds.

In the case of the ultraviolet ray-curable coating material, there can be used an ultraviolet ray cationic coating material of a combination of an ultraviolet ray-curable epoxy resin and a photocationic polymerization catalyst, or an ultraviolet ray radical polymerization type coating material of a combination of an ultraviolet ray-curable monomer or prepolymer and a photopolymerization catalyst.

When the film is to be formed by a coating in the invention, there can be particularly desirably used an epoxy/phenol coating material (epoxy resin/bisphenol resin), a polyester/amino coating material (polyester resin/butylated melamine resin), etc.

The above coating material is applied onto a metal sheet in the form of an organic solvent solution such as enamel or lacquer, or in the form of an aqueous dispersion solution or an aqueous solution by roller coating, spray coating, dip coating, electrostatic coating or electrophoretic coating, followed by firing or curing by ultraviolet rays to thereby form a film on the base material.

If the coating is too cured, the film becomes too hard, and the laser abrasion cannot be effectively generated unless the laser output is increased, which is not desirable in economy and productivity.

As described above, further, even when the resin constituting the resin film or the coating does not have an aromatic ring, the laser abrasion can be efficiently generated by the irradiation with a laser beam if the resin is blended with a dye or an organic pigment, or with an additive comprising a compound having an aromatic ring, such as an antioxidant to thereby form a regularly arranged fine periodic structure capable of expressing structured colors.

As the dyes, though there is no particular limitation, there can be used azo dye, anthraquinone dye, indigo dye, phthalocyanine dye, pyrazolone dye, stilbene dye, thiazole dye, quinoline dye, diphenylmethane die, triphenylmethane die, acridine dye, azine dye, thiazine dye, oxazine dye, polymethine dye, indophenol dye, naphthalimide dye and perylene dye.

The content of the dye varies depending on its kind and cannot be definitely specified but is, preferably, from 1 to 20 parts by weight per 100 parts by weight of the resin component that constitutes the film.

As the pigments, further, though not limited thereto only, there can be used organic pigments such as monoazo pigment, dis-azo pigment, $\beta$-naphthol · naphthol AS pigment, azolake pigment, benzimidazolone pigment, dis-azo condensed pigment, isoindolinone · isoindoline pigment, phthalocyanine pigment, quinacridone pigment, dioxazine pigment, dichloropyrrolopyrrole pigment, quinophthalone pigment, perylene · perynone pigment, thioindigo pigment and anthraquinone.

The content of the pigment varies depending on its kind and cannot be definitely specified but is, preferably, from 0.01 to 20 parts by weight per 100 parts by weight of the resin component that constitutes the film.

As the additive, there can be used, for example, an antioxidant of the type of phenol.

The thickness of the film can be suitably determined depending upon the use of the laminated structural body without any particular limitation. In the case of the resin film, in general, the thickness is desirably in a range of 1 to 300 $\mu$m and, particularly, 12 to 150 $\mu$m. In the case of the coating, the thickness is desirably in a range of 1 to 20 $\mu$m and, particularly, 3 to 15 $\mu$m.

The film does not necessarily have to be formed on the whole surfaces of the base material. By forming a desired pattern, further, a decorative effect can be newly imparted.

If the film has no adhesiveness to the base material, an adhesive layer may be formed.

[Protection layer]

In the laminated structural body of the present invention, the protection layer that is formed as required can assume any known form of a resin film or a coating so far as it permits the laser beam that is used to pass through.

As the resin film, there can be preferably used a polyester resin such as polyethylene terephthalate, an olefin resin such as polyethylene or polypropylene, a polyamide resin such as nylon, or polycarbonate.

As the coating, further, there can be preferably used an acrylic coating material or a finishing varnish that has heretofore been used as a top coating.

The thickness of the protection layer varies depending upon the kind of the resin or the coating material that forms the protection layer and cannot be definitely specified, but is, desirably, in a range of 1 to 300 $\mu$m and, particularly,

12 to 150 μm in the case of a resin film, and is, desirably, in a range of 1 to 10 μm and, particularly, 3 to 5 μm in the case of a coating. If the thickness is smaller than the above range, the fine periodic structure is not sufficiently protected by the protection layer that is formed. If the thickness is greater than the above range, on the other hand, the laser beam does not effectively reach the film as compared to when the thickness is in the above range, simply giving disadvantage in economy which is not desirable.

If there is no adhesiveness between the protection layer and the film, an adhesive may be provided. In this case, it needs not be pointed out that the adhesive layer, too, permits the laser beam to pass through.

As the laser beam used for the laminated structural body of the invention and as a combination of the film and the protection layer for constituting the laminated structural body, the following combinations are preferred though not limited thereto only.

(1) When YAG third harmonics (pulse oscillation): 355 nm are used.
PEN/PET, PEN/varnish and the like in order of film:protection layer.
(2) When YAG fourth harmonics (pulse oscillation): 266 nm are used.
PET/PP, PET/varnish, epoxy-phenol coating material/urea coating material, polyester-amino coating material/acrylic coating material and the like in order of film: protection layer.

(Method of forming a laminated structural body)

The laminated structural body of the invention has the above layer constitution and takes the form of cap, can lid, can, bottle, cup, tray, pouch, sheet or film. The laminated structural body of the invention forms the above-mentioned film, and can be produced by a known molding method with the exception of forming a fine structure by the LIPS working after having been molded.

The cap may be made from either a metal or a resin. The metal cap is molded by using a coated metal sheet on which the above film has been formed or by using a metal sheet coated with a resin. Or, the cap is molded by using a metal sheet on which no film has been formed, and the above-mentioned coating material is applied thereon to form a film on the surface of the cap. The cap that is molded is, thereafter, subjected to the LIPS working to form a fine periodic structure in the surface of the film.

The resin cap can be molded by a known method of molding resin caps, such as injection molding, extrusion molding or compression molding. The above coating material is applied onto the cap that is molded to form a film thereon. Depending upon the shape of the cap or the kind of the resin that is used, however, the film can be formed on the surface of the base material relying on the co-injection molding or co-extrusion molding, or by compression-molding a molten mass in which a resin for constituting the base material is wrapped with the resin that constitutes the film. The cap after having been molded is subjected to the LIPS working in the same manner as in the case of the metal cap.

The metal can is be molded by using the above coated metal sheet forming the film or the resin-coated metal sheet. Or, a can that is not yet forming a film is molded and on which the above coating material or the resin film is applied to form a film followed by the LIPS working to form a fine periodic structure in the surface of the film. The metal can may be either a three-piece can or a two-piece can, and can be molded by a known method.

Depending upon the kinds of the resins that are used, further, the resin bottle can be molded by the co-injection molding method or by biaxially stretch-blow-molding a multilayer preform obtained by compression-molding a molten mass in which the resin that constitutes the base material is wrapped with the resin that constitutes the film. Or, the resin bottle can be molded by the injection-blow molding. After the bottle has been formed, further, a coating material is applied thereon to form a film on the surface of the bottle.

Further, the multilayer sheet or the multilayer film formed by the extrusion-coating method, dry-lamination method or by heat-adhering the cast films or stretched films, may be subjected to the LIPS working to use it as a packing material. Or, the multilayer sheet or the multilayer film is molded into a desired shape such as cup or the like by vacuum-molding or plug-assisted molding, followed by the LIPS working. Or, the multilayer sheet or the multilayer film after subjected to the LIPS working may be molded into a pouch or the like.

The resin container, too, can be coated with the coating material after it has been molded to form the film thereon.

(Laser beam irradiation apparatus)

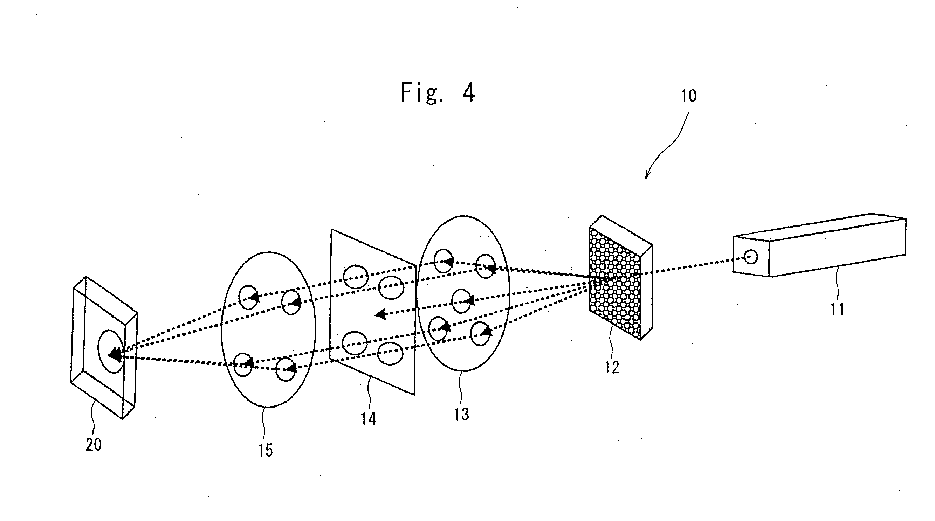

A laser beam irradiation apparatus 10 forms a regularly arranged fine periodic structure for expressing structured colors in the surface of the film of the laminated structural body of the invention. Referring to Fig. 4, the laser beam irradiation apparatus 10 includes a laser oscillator 11, a beam splitter (transmission type diffraction optical element) 12, a collimator element 13, a beam flux selector element 14 and a focusing element 15.

The laser oscillator (laser beam source) 11 is a device for outputting a laser beam, which, according to the present invention is, preferably, a YAG laser, a YVO$_4$ laser or a YLF laser.

That is, a pulse laser of high power is necessary for working the surface of the film. When structured colors are to be expressed by using the fine periodic structure, further, the pitch of the fine periodic structure is about 0.5 to 2 μm so that colors are efficiently developed in visible rays. To precisely work the periodic structure, the wavelength of the laser beam must be in the region of ultraviolet wavelengths, which is shorter than the above pitch. Besides, since many resins forming the film exhibit absorbing property in the UV region, the laser beam must have an ultraviolet ray wavelength. Moreover, the laser abrasion for forming the fine periodic structure utilizes the interference of laser beams and, therefore, the laser beams must be highly coherent. On account of these reasons, the above lasers can be preferably used.

These pulse lasers have recurring frequencies of several Hz to several tens of MHz. During these recurring periods, the stored energy is emitted in such short periods of time as several ps to several tens of ns making it possible to efficiently obtain a high peak power from a small input energy.

The laser oscillator 11 has a function for adjusting the number of irradiation pulses. Upon adjusting the laser output, further, the laser oscillator 11 works to control the energy density (fluency: energy per a pulse irradiation area).

The energy density can be, further, controlled by, for example, varying the diameter of the irradiation beam while maintaining the same laser output in addition to adjusting the laser output of the laser oscillator 11.

The beam splitter 12 is a transmission type optical element having fine dented portions or protruded portions periodically engraved on the surface thereof to cause diffraction, and splits the laser beam into a plurality of beam fluxes.

As the collimator element 13, there can be used a synthetic quartz plano-convex lens having a focal distance of, for example, 200 mm. In this case, the collimator element 13 is placed at a position 200 mm away from the beam splitter 12. The collimator element 13 permits the passage of a plurality of beam fluxes split by the beam splitter 12.

The beam flux selector element 14 is placed at a position where the beam fluxes that have passed through the collimator element 13 form focal points, and shuts off the beam fluxes that are not necessary for the interference among the plurality of beam fluxes and permits only those beam fluxes that are necessary.

As the focusing element 15, there can be used a synthetic quartz plano-convex lens having a focal distance of, for example, 100 mm to collect the beam fluxes that have passed through the beam flux selector element 14 so that the beam fluxes intersect and interfere.

As the collimator element and the focusing element, there can also be used such optical elements as Fresnel lenses or GRIN (graded-index) lenses in addition to convex lenses.

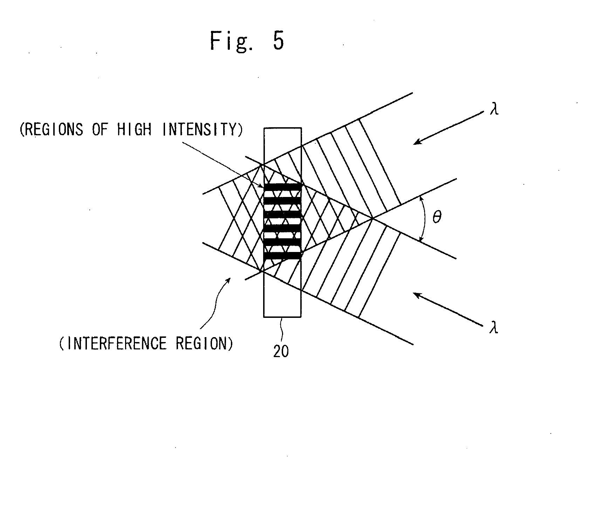

In the region of interference as shown in Fig. 5, the regions of high intensity are distributed, and the laminated structural body 20 is irradiated in this region. Here, the gap (period) d of among the regions of high intensity in the interference region vary depending upon the angle θ of intersection of beam fluxes. By using a laser wavelength λ and the angle θ of intersection of beam fluxes, the period d of the regions of high intensity is found according to the following formula,

$$d = \lambda / (2 \sin (\theta /2))$$

(Forming a fine periodic structure)

The laminated structural body of the invention forming the film on the surface of the base material is arranged at a position separated by a predetermined distance away from the focusing element 15 in the laser beam irradiation apparatus. This position is in the interference region where the plurality of beam fluxes intersect due to the focusing element 15 (see Fig. 5).

The laser irradiation apparatus 10 outputs a laser beam which is split by the beam splitter 12 into the plurality of beam fluxes. The focusing element 15 causes the plurality of beam fluxes to intersect to thereby form the interference region where the laminated structural body 20 is irradiated with the beams. Here, the laminated structural body 20 is made from the material that does not permit passage of beams having wavelengths of the laser beam which, therefore, cannot travel beyond the surface of the film 2.

In the case of the laminated structural body shown in Fig. 3, further, the material constituting the protection layer permits the laser beam to pass through. Therefore, the laser beam reaches the surface of the film passing through the protection layer but cannot travel beyond the surface of the film.

Further, upon being irradiated with the laser beam in the interference region, an optical intensity profile is periodically excited in the surface of the film 2, and laser abrasion occurs in the regions of high intensity. Due to the occurrence of laser abrasion, dented portions 3 are formed in the surface of the film, and a fine periodic structure of a dented-and-protruded shape is formed in the surface of the film, the fine periodic structure being formed in synchronism with the periodic intensity profile.

EXAMPLES

The invention will now be described in detail by way of Examples.

(Example 1)

PET films were laminated on both surfaces of an aluminum sheet which was, then, molded into a can body to prepare a laminated structural body. After molded, thicknesses of the layers were such that the aluminum sheet was about 100 μm thick, and the PET films on the inner and outer sides were about 6 μm thick, respectively. By using the laser beam irradiation apparatus, the laminated structural body was irradiated with YAG fourth harmonic (wavelength, 266 nm) from the side of the outer PET film. Pulses of the YAG laser possessed a pulse width of 5 ns and a recurring frequency of 10 Hz. The transmission factor of the PET film for the forth harmonic was 0%.
As a result, the fine periodic structure of the dented-and-protruded shape was formed in the surface of the outer PET film, and structured colors were observed developing rainbow colors. The period of the formed fine periodic structure was about 1.6 μm.

(Example 2)

The PET film was laminated on one surface of the aluminum sheet and, thereafter, a vinyl chloride/vinyl acetate coating material (VAGH) was applied onto the surface of the PET film to prepare a laminated structural body. Here, the aluminum sheet corresponds to the base material, the PET film corresponds to the film, and the vinyl chloride/vinyl acetate coating material corresponds to the protection layer. Thicknesses of the layers were such that the aluminum sheet was 200 μm thick, the PET film was 12 μm thick, and the vinyl chloride/vinyl acetate coating material was about 2 μm thick.
As the laser beam to be irradiated, Q-switch pulse YAG laser fourth harmonic (wavelength, 266 nm) were used, which the PET film did not permit to pass through but the vinyl chloride/vinyl acetate coating material permitted to pass through. The transmission factor of the PET film for the YAG fourth harmonic was 0% while the transmission factor of the vinyl chloride/vinyl acetate coating material for the YAG fourth harmonic was 85.4%. Pulses of the YAG laser possessed a pulse width of 5 ns and a recurring frequency of 10 Hz.
By using the laser beam irradiation apparatus, the laminated structural body was irradiated with YAG fourth harmonic from the side of the vinyl chloride/vinyl acetate coating material. As a result, structured colors were observed developing rainbow colors, and the colors were not erased even after rubbed with fingers. It was, therefore, learned that a fine periodic structure had been formed in the interface between the vinyl chloride/vinyl acetate coating material that was the protection layer and the PET film that was the film. The period of the formed fine periodic structure was about 1.6 μm.

(Examples 3 to 9 and Comparative Examples 1 to 5)

Resin compositions for various coating materials shown in Table 1 were applied onto the one surface of a quartz glass plate (0.1 cm thick, 1 cm wide, 6 cm long, Ra = 0.55 μm) in a manner that the thickness of the coatings was 2 μm to prepare samples of Examples 3 to 9 and Comparative Examples 1 to 5. By using the above laser beam irradiation apparatus, the coatings of the prepared samples were irradiated with a laser beam of a wavelength of 266 nm to confirm if rainbow colors were expressed and if the laser beam was absorbed in the laser wavelength region by using an ultraviolet spectrophotometer. The results were as shown in Table 1.

Table 1

|  | | Coating resin composition | Rainbow colors expressed | Absorption at 266 nm |
|---|---|---|---|---|
|  | Ex. 3 | phthalic acid polyester resin/butylated melamin resin (wt. ratio 70:30) | yes | yes |
|  | Ex. 4 | epoxy ester resin | yes | yes |
|  | Ex. 5 | butylated benzoguanamine resin | yes | yes |
|  | Ex. 6 | resol resin | yes | yes |
|  | Ex. 7 | Epoxy resin/bisphenol resin (wt. ratio 80:20) | yes | yes |
|  | Ex. 8 | vinyl chloride · vinyl acetate copolymer resin/resol resin | yes | yes |

(continued)

| | | Coating resin composition | Rainbow colors expressed | Absorption at 266 nm |
|---|---|---|---|---|
| | | (wt. ratio 90:10) | | |
| | Ex. 9 | vinyl chloride - vinyl acetate copolymer resin/epoxy resin (wt. ratio 90:10) | yes | yes |
| | Comp. Ex. 1 | vinyl chloride/vinyl acetate copolymer resin | no | no |
| | Comp. Ex. 2 | butylated urea resin | no | no |
| | Comp. Ex. 3 | butylated melamine resin | no | no |
| | Comp. Ex. 4 | vinyl chloride · vinyl acetate copolymer resin/ butylated urea resin | no | no |
| | Comp. Ex. 5 | acrylic acid · methacrylic acid copolymer resin | no | no |

As a result, in Comparative Examples 1 to 5 having no benzene ring on the skeleton of the coating material resin, there was no change in the appearance before and after the irradiation with the laser beam. In Examples 3 to 9 having a benzene ring, on the other hand, regularly arranged rainbow colors were vividly expressed on the surface of the film after irradiated with the laser beam. In Examples 3 to 9, further, the absorption was recognized in the laser beam wave region of 266 nm. It can, therefore, be said that rainbow colors are expressed by the film that has absorption in the above wavelength region or, in other words, that does not permit passage of light in the above wavelength region.

(Examples 10 to 13, Reference Examples 1, 2 and Comparative Examples 6, 7)

On the one surface of the aluminum sheet (0.2 mm thick, Ra = 2.3 $\mu$m), there were formed films (4 $\mu$m thick) of resin compositions for various coating materials shown in Table 2 and a protection layer (4 $\mu$m thick) in combination to prepare samples of Examples 10 to 13 so as to have coatings containing resin compositions that possessed a benzene ring at least in the films. There were, further, formed single-layer coatings containing resin compositions having a benzene ring (Reference Examples 1 and 2), and coatings containing resin compositions without benzene ring in the films (Comparative Examples 6 and 7). The obtained coated aluminum sheets were so press-molded that the coated surfaces were on the outer surface side, and from which aluminum caps were prepared having an outer diameter of top panel of 38 mm. By using the above-mentioned laser beam irradiation apparatus, the coatings on the outer surfaces of the caps were irradiated with the laser beam having a wavelength of 266 nm to confirm if rainbow colors were expressed and if there was any change after the surfaces were rubbed with fingers. The results were as shown in Table 2.

<u>Table 2</u>

| | | Film | Protection layer | Rainbow colors expressed | Change after touched with fingers |
|---|---|---|---|---|---|
| | Ex. 10 | epoxy resin/bisphenol resin | butylated urea resin | yes | no change |
| | Ex. 11 | epoxy resin/bisphenol resin | vinyl chloride · vinyl acetate copolymer resin/ butylated urea resin | yes | no change |
| | Ex. 12 | phthalic acid polyester resin/butylated melamine resin | acrylic acid · methacrylic acid copolymer resin | yes | no change |
| | Ex. 13 | vinyl chloride · vinyl acetate copolymer resin/resol resin | vinyl chloride · vinyl acetate copolymer resin/butylated urea resin | yes | no change |
| | Ref. Ex. 1 | phthalic acid polyester resin/butylated melamine resin | - | yes | extinguished |
| | Ref. Ex. 2 | epoxy resin/bisphenol resin | - | yes | extinguished |
| | Comp. Ex. 6 | vinyl chloride · vinyl acetate copolymer resin | epoxy resin/bisphenol resin | yes | extinguished |
| | Comp. Ex. 7 | vinyl chloride · vinyl acetate copolymer resin | epoxy ester resin | yes | extinguished |

As a result, rainbow colors were expressed by all coatings containing, in either the film or the protection layer, the resin that did not permit passage of light. In Reference Examples 1, 2 and Comparative Examples 6, 7 that contained, in the outermost coating layer, the resin that did not permit passage of light, however, the rainbow colors became dim if surfaces of the coatings were rubbed with fingers after they have been irradiated with light. In Examples 10 to 13 which possessed a coating containing, in the film only, the resin that did not permit passage of light and possessed a coating containing, in the protection layer (outermost coating layer), the resin that permitted passage of light, on the other hand, no change was seen and rainbow colors were vividly expressed. It was, therefore, learned that the rainbow color-expressing layer was present in the very outermost interface of the coating that contained the resin that did not permit passage of light.

Industrial Applicability:

According to the LIPS working employed by the present invention, fine periodic structures can be formed in the curved surfaces and in the dented-and-protruded surfaces unlike those of forming fine periodic structures by the reproduction of the printing block. Therefore, the fine periodic structures can be imparted to the caps and cans in the subsequent working maintaining good productivity.

With the protection layer being formed on the surface of the film, further, the laminated structural body is legible for its structured colors from the outer side thereof. Further, upon being formed inside the laminated structural body, the fine periodic structure is not damaged or contaminated effectively preventing such an occurrence that the intended structured colors are not expressed. Therefore, the laminated structural body can be used as a marking for representing the truth or falsehood.

Moreover, no printing block is required, and the pattern can be changed by changing a scanning program lending the laminated structural body well applicable to a variety of kinds of articles produced in small quantities.

Description of Reference Numerals:

1 - base material   2 - film   3 - dented portions

4 - protection layer   10 - laser beam irradiation apparatus

11 - laser oscillator   12 - beam splitter

13 - collimator element   14 - beam flux selector element

15 - focusing element   20 laminated structural body

## Claims

1. A laminated structural body comprising a base material (1) and a film (2), wherein said film is a film that does not permit passage of laser beam that is used and that contains compounds having an aromatic ring, and a regularly arranged periodic structure of a dented-and-protruded shape that expresses structured colors is formed in the surface of said film by the irradiation with a laser beam having a periodic intensity profile.

2. The laminated structural body according to claim 1, wherein the wavelength of said laser beam lies in a wavelength region in which said film does not permit passage of light.

3. The laminated structural body according to claim 1, wherein a protection layer (4) that permits passage of said laser beam is formed on the surface of said film, and the regularly arranged periodic structure that expresses structured colors is formed in the interface between said film and the protection layer.

4. The laminated structural body according to claim 1, wherein said compounds are high molecular compounds having the aromatic ring in the molecular chains thereof.

5. The laminated structural body according to claim 1, wherein said base material comprises any one of a metal, a glass or a plastic material.

6. The laminated structural body according to claim 1, wherein said laminated structural body is a metallic or resin cap having said film positioned on the outer surface side of said base material.

7. The laminated structural body according to claim 1, wherein said laminated structural body is a metal can having the film positioned on the outer surface side of said base material.

**Patentansprüche**

1. Laminierter Strukturkörper, umfassend ein Basismaterial (1) und eine Folie bzw. einen Film (2), wobei der Film ein Film ist, der keinen Durchlaß eines Laserstrahls, welcher verwendet wird, zuläßt und der Verbindungen mit einem aromatischen Ring enthält, und wobei eine regulär angeordnete periodische Struktur von einer eingekerbten und herausragenden Form, welche strukturierte Farben ausdrückt, in der Oberfläche der Folie durch Bestrahlung mit einem Laserstrahl mit einem periodischen Intensitätsprofil gebildet ist.

2. Laminierter Strukturkörper gemäß Anspruch 1, wobei die Wellenlänge des Laserstrahls in einem Wellenlängenbereich liegt, in welchem der Film keinen Lichtdurchlaß zuläßt.

3. Laminierter Strukturkörper gemäß Anspruch 1, wobei eine Schutzschicht (4), welche den Durchlaß des Laserstrahls zuläßt, auf der Oberfläche des Films gebildet ist und wobei die regulär angeordnete periodische Struktur, welche strukturierte Farben ausdrückt, in der Grenzfläche zwischen dem Film und der Schutzschicht gebildet ist.

4. Laminierter Strukturkörper gemäß Anspruch 1, wobei die Verbindungen hochmolekulare Verbindungen mit dem aromatischen Ring in den Molekülketten davon sind.

5. Laminierter Strukturkörper gemäß Anspruch 1, wobei das Basismaterial jedwedes von einem Metall, einem Glas oder einem Kunststoffmaterial umfaßt.

6. Laminierter Strukturkörper gemäß Anspruch 1, wobei der laminierte Strukturkörper eine metallische oder Harz-Kappe mit dem Film angeordnet auf der äußeren Oberflächenseite des Basismaterials ist.

7. Laminierter Strukturkörper gemäß Anspruch 1, wobei der laminierte Strukturkörper eine Metallbüchse mit dem Film angeordnet auf der äußeren Oberfläche des Basismaterials ist.

**Revendications**

1. Corps de structure laminé comprenant un matériau de base (1) et un film (2), dans lequel ledit film est un film qui ne permet pas le passage d'un faisceau laser qui est utilisé et qui contient des composés présentant un cycle aromatique, et une structure périodique agencée régulièrement, de forme bosselée et en saillie, qui exprime des couleurs structurées est formée sur la surface dudit film par rayonnement avec un faisceau laser présentant un profil d'intensité périodique.

2. Corps de structure laminé selon la revendication 1, dans lequel la longueur d'onde dudit faisceau laser est comprise dans une plage de longueurs d'ondes dans laquelle ledit film ne permet pas le passage de la lumière.

3. Corps de structure laminé selon la revendication 1, dans lequel une couche de protection (4) qui permet le passage dudit faisceau laser est formée sur la surface dudit film, et la structure périodique agencée régulièrement qui exprime des couleurs structurées est formée sur l'interface entre ledit film et la couche de protection.

4. Corps de structure laminé selon la revendication 1, dans lequel lesdits composés sont des composés de poids moléculaire élevé comportant le cycle aromatique sur leurs chaînes moléculaires.

5. Corps de structure laminée selon la revendication 1, dans lequel ledit matériau de base comprend l'un quelconque d'un métal, d'un verre ou d'une matière plastique.

6. Corps de structure laminée selon la revendication 1, dans lequel ledit corps de structure laminé est un couvercle métallique ou en résine comportant ledit film positionné sur le côté de surface externe dudit matériau de base.

7. Corps de structure laminé selon la revendication 1, dans lequel ledit corps de structure laminé est une boîte métallique comportant le film positionné sur le côté de surface externe dudit matériau de base.

Fig. 1

Fig. 2

Fig. 3

Fig. 4

# Fig. 5

(REGIONS OF HIGH INTENSITY)

(INTERFERENCE REGION)

$\lambda$

$\theta$

$\lambda$

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3060115 B
- JP 2007286113 A
- WO 2007119773 A1
- US 20060263554 A1

**Non-patent literature cited in the description**

- **SYLVAIN LAZARE.** Large Scale Excimer Laser Production of Submicron Periodic Structures on Polymer Surface. *Applied Surface Science,* 1993, vol. 69, 31-37